(19)

Europäisches
Patentamt
European
Patent Office
Office européen
des brevets

(11)  **EP 2 728 585 B1**

(12)  **EUROPEAN PATENT SPECIFICATION**

(45) Date of publication and mention
of the grant of the patent:
**30.03.2016  Bulletin 2016/13**

(51) Int Cl.:
*G21D 1/00* *(2006.01)*   *B24B 29/08* *(2006.01)*
*B24B 5/38* *(2006.01)*   *C21D 9/08* *(2006.01)*
*C22F 1/10* *(2006.01)*

(21) Application number: **12738236.4**

(22) Date of filing: **28.06.2012**

(86) International application number:
**PCT/JP2012/066496**

(87) International publication number:
**WO 2013/002314 (03.01.2013 Gazette 2013/01)**

(54) **METHOD FOR PRODUCING STEAM GENERATOR HEAT TRANSFER TUBE FOR NUCLEAR POWER PLANT**

VERFAHREN ZUR HERSTELLUNG EINES DAMPFERZEUGER-WÄRMEÜBERTRAGUNGSROHRS FÜR EIN KERNKRAFTWERK

PROCÉDÉ DE PRODUCTION D'UN TUBE DE TRANSFERT DE CHALEUR DE GÉNÉRATEUR DE VAPEUR POUR CENTRALE NUCLÉAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.06.2011   JP 2011144224**

(43) Date of publication of application:
**07.05.2014   Bulletin 2014/19**

(73) Proprietor: **Nippon Steel & Sumitomo Metal Corporation**
**Tokyo 100-8071 (JP)**

(72) Inventor: **HYODO, Shigetoshi**
**Osaka-shi, Osaka 541-0041 (JP)**

(74) Representative: **Zimmermann & Partner Patentanwälte mbB**
**Postfach 330 920**
**80069 München (DE)**

(56) References cited:
**EP-A1- 1 350 600      CN-Y- 201 023 204**
**DE-A1- 19 855 102     JP-A- 2 080 552**
**JP-A- 5 112 842        JP-A- 62 004 557**
**JP-A- H05 112 842      JP-A- 2002 079 444**
**JP-A- 2007 224 371**

**Description**

**TECHNICAL FIELD**

The present invention relates to a producing method of a heat-exchanger tube for a steam generator for use in a nuclear power plant, and a heat-exchanger tube for a steam generator.

**BACKGROUND ART**

Nuclear power plants generate steam through fission energy, inject the generated steam to turbines to rotate them, thereby generating electric power. There are various kinds of nuclear reactors such as boiling water reactors (BWR) that generate steam through fission energy and rotate turbines with this generated steam, and pressurized water reactors (PWR) that generate hot water (primary coolant) through fission energy, generate another steam (secondary coolant) with this hot water, and rotate turbines with this generated steam.

In the pressurized water reactors, the primary coolant pressurized at high pressure becomes hot water whose temperature is approximately 300°C without being boiled, and is transferred through a tremendous number of steam generator tubes (SG tubes) each having a diameter of approximately 2 cm installed in steam generators, thereby heating and boiling the secondary coolant flowing outside the SG tubes. The primary coolant deprived of heat by the secondary coolant is returned to nuclear reactors to be reheated, and the secondary coolant in a steam state rotates turbines, and is then cooled in condensers, and thereafter is returned to the steam generators to be re-heated.

Nickel-based alloys such as a 60%Ni-30%Cr-10%Fe alloy excellent in mechanical performance as well as excellent in corrosion resistance are used as members of the steam generators. SG tubes are produced by hot-working and cold-rolling alloy having a predetermined chemical composition into a predetermined product shape, and thereafter are produced into finished products through the following steps: a heat treatment (annealing) step for the purpose of dissolving carbide generated during the hot working, and removing internal distortion generated during a machining process, and the like (referred to as a "first heat treatment step", hereinafter), a straightening step for adjusting linearity; a grinding step for the purpose of amending flaws generated in each step, and adjusting surface roughness, and the like; and a heat treatment step for the purpose of semi-continuously precipitating C dissolved in the first heat treatment step as Cr carbide ($Cr_{23}C_6$) at grain boundaries, and also for the purpose of restoring a Cr depleted zone in the vicinity of the Cr carbide (referred to as a "second heat treatment step", hereinafter).

The present inventors have disclosed inventions set forth in JP 05-112842A, JP 05-195191A, JP 07-252564A, JP 2002-121630A, JP 2007-224371A and JP 2007-224372A pertinent to the producing method of SG tubes.

**DISCLOSURE OF THE INVENTION**

**PROBLEMS TO BE SOLVED BY THE INVENTION**

In the grinding step of grinding a heat-exchanger tube for a steam generator for use in a nuclear power plant, it is required to satisfy strict regulations on a grinding margin (0.01 mm or more), and on a residual stress level of a tube surface (138 MPa or less), and in order to carry out grinding under such strict conditions, belt paper type grinding has been employed in a conventional grinding step. For example, in Example of JP 05-112842A, the grinding step between the first heat treatment step and the second heat treatment step is carried out by using "emery paper #320". However, although the preceding and subsequent heat treatment steps can be continuously carried out, the grinding step therebetween always requires exchange of grinding members. Particularly in the belt paper type grinding, a grinding member easily comes off, which likely decreases amount of grinding. Consequently, grinding paper should be exchanged at high frequency, which is a cause of deteriorating efficiency of production of SG tubes.

As an example of the grinding method, a method of grinding a tube surface using a flap wheel self-driven to rotate (referred to as a "wheel-type grinding", hereinafter) is utilized in various fields. This wheel type grinding has high grinding performance, so that this is suitable for high efficient grinding, but there are the following problems as well.

Specifically, in the grinding step of grinding an outer surface of a SG tube, it is required to strictly control amount of grinding, and surface roughness as well as residual stress after the grinding, and it has been considered that directly applying the wheel grinding to the grinding step may cause inevitable problems such as excessive grinding as well as variation in amount of grinding and variation in surface roughness in the longitudinal direction (particularly at both ends) of the tube. Particularly, it is considered to be difficult to apply the wheel type grinding to the grinding step of a production process of a heat-exchanger tube for a steam generator for use in a nuclear power plant, because the grinding step is carried out after the first heat treatment step, as aforementioned, and the wheel type grinding likely generates residual stress in the grinding step; thus there is no case of applying such a wheel type grinding to the grinding step. Hence, the belt paper type grinding having less amount of grinding has been employed.

In order to solve the aforementioned problems of the prior art, the present inventors have conducted various studies to attain the following target: the tube surface roughness Ra of 1 $\mu$m or less, preferably 0.5 $\mu$m or less, the amount of grinding (indicating a difference between outer diameters of the tube before and after the grinding) of 80 $\mu$m or more, and the residual stress of 138 MPa or less after the grinding step; and as a result, the present inventors have found that even the wheel type grinding is feasible in the grinding step without applying residual stress. The present inventors have found a method of applying no residual stress more than a specified value, particularly in the case of subdividing the grinding step of a heat-exchanger tube for a steam generator for use in a nuclear power plant into a rough grinding sub-step, an intermediate grinding sub-step, and a finishing grinding sub-step, and particularly in the case of configuring each sub-step to be a multiple-stage grinding sub-step carried out by using multiple heads.

The present invention has been accomplished based on the above findings, and an object of the present invention is to provide a producing method of a heat-exchanger tube for a steam generator for use in a nuclear power plant, and a heat-exchanger tube for a steam generator with enhanced efficiency of production.

## MEANS FOR SOLVING THE PROBLEMS

The gist of the present invention is described by the following producing method of a heat-exchanger tube for a steam generator for use in a nuclear power plant.

(A) A producing method of a heat-exchanger tube for a steam generator for use in a nuclear power plant having steps:

annealing a tube;
grinding an outer surface of the tube with a wheel type grinding member, the grinding comprising a rough grindind sub-step, an intermediate grinding substep, and a finishing grinding substep; and
applying heat treatment to the tube under an environment of an oxidation inhibition atmosphere (which denotes vacuum, or inert gas atmosphere such as Ar), wherein the wheel type grinding member is allowed to abut against the outer surface of the tube while the tube is moved in a longitudinal direction thereof with a rotation of a circumferential direction thereof so as to grind the tube, wherein
the grinding step satisfies the following Formula (1):

$$Ra_1 / OD_1 \geq 0.10 \quad (1),$$

where each symbol in the above formula denotes as follows:

$Ra_1$: surface roughness Ra ($\mu$m) after grinding with an initial grinding member,
$OD_1$: amount of grinding ($\mu$m) after grinding with the initial grinding member.

(B) The producing method of a heat-exchanger tube for a steam generator for use in a nuclear power plant set forth in (A) or (B), wherein the residual stress of the tube after the grinding step is 138 MPa or less.
(C) The producing method of a heat-exchanger tube for a steam generator for use in a nuclear power plant set forth in any one of (A) to (C), wherein the surface roughness Ra of the tube after grinding is 1.0 $\mu$m or less, and amount of grinding after the grinding step is 80 $\mu$m or more.
(D) The producing method of a heat-exchanger tube for a steam generator for use in a nuclear power plant set forth in any one of (A) to (D), wherein the grinding step carries out grinding by using 5 or more to 10 or less successive grinding members.

## ADVANTAGEOUS EFFECT(S) OF THE INVENTION

According to the present invention, it is possible to enhance efficiency of production of a heat-exchanger tube for a steam generator for use in a nuclear power plant.

## BRIEF DESCRIPTION OF THE DRAWING

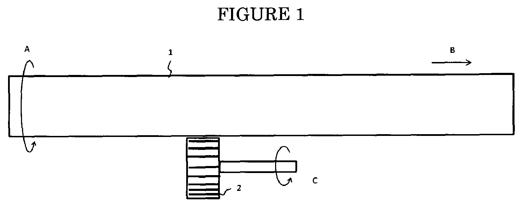

Figure 1 is a drawing explaining the producing method of a heat-exchanger tube for a steam generator for use in a nuclear power plant of the present invention.

## MODE FOR CARRYING OUT THE INVENTION

A heat-exchanger tube for a steam generator for use in a nuclear power plant according to the present invention is produced in such a manner that a seamless tube is obtained through a common process such as piercing-rolling, elongation rolling, and sizing, and thereafter, the processed tube is subjected to a annealing step (the aforementioned first heat treatment step), a grinding step of grinding an outer surface of the tube, and a heat treatment step (the aforementioned second heat treatment step) of carrying out heat treatment under an environment of an oxidation inhibition atmosphere.

As shown in Figure 1, the producing method of a heat-exchanger tube for a steam generator for use in a nuclear power plant according to the present invention has a feature that a tube 1 is moved in its longitudinal direction (arrow B in the drawing) while the tube 1 is being rotated in its circumferential direction (arrow A in the drawing), and a wheel type grinding member 2 is allowed to abut against an outer surface of the tube 1 so as to grind the tube 1. At this time, the wheel type grinding member 2 may be allowed to abut against the outer surface of the tube 1 while the wheel type grinding member 2 is being rotated in its circumferential direction (arrow C in the drawing) so as to carry out the grinding.

Because of its greater mechanical strength than that of a conventional belt paper type grinding member, the configuration of grinding the outer surface of the tube using such a wheel type grinding member facilitates constant pressure rolling during the grinding, and in this configuration, the rotational frequency of an electric motor that drives the wheel is controlled such that the outer circumferential speed of the grinding member becomes constant even if the wheel member becomes worn away, and the pushing force of the wheel is also controlled by controlling load current to be constant (constant pressure rolling), which makes it easier to maintain the amount of grinding to be constant even if the wheel becomes worn away.

In the wheel grinding, it is preferable to allow the rotating wheel to abut against the tube while the tube is being fed in the axial direction at a certain skew angle with the tube kept rotating to grind. At this time, the skew angle is preferably adjusted such that the feed pitch becomes 5 to 15 mm / rev. The rotational frequency of the tube is preferably controlled such that the circumferential speed of the tube rotation becomes equal to the circumferential speed of the wheel rotation, and the rotational direction of the tube becomes inverse to that of the wheel. At this time, the tube rotates at a high speed, so that a greater axial feed of the tube causes greater vibration of leading ends of the tube, which makes an automatic conveyance difficult. Accordingly, the maximum feed pitch (mm / rev) is preferably limited to be 70% or less of the outer diameter value, for example.

In the present invention, particularly, the grinding step includes a rough grinding sub-step, an intermediate grinding sub-step, and a finishing grinding sub-step, and at least the rough grinding sub-step and the finishing grinding sub-step are preferably configured to carry out each grinding using plural grinding members. The configuration of employing three sub-steps to grind the tube until this tube has predetermined amount of grinding and surface roughness enables suppression of residual stress generated in the tube, and facilitates adjustment on the surface roughness of the outer surface of the tube, as well as secures sufficient amount of grinding, thereby attaining efficient grinding of the heat-exchanger tube for a steam generator for use in a nuclear power plant. Particularly, it is more preferable to grind the tube using grinding members having 5 or more successive grinding heads. Note that it is preferable to use grinding members having 10 or less successive grinding heads because more grinding heads results in increase in the cost of equipment.

In the grinding step, it is preferable to employ such a condition that allows the surface roughness and the amount of grinding of the tube to satisfy the following Formula (1). Based on the studies conducted by the present inventors, the condition regarding the initial grinding member gives the greatest influence in the case of applying the wheel type grinding to the heat-exchanger tube for a steam generator (SG tube) for use in a nuclear power plant; thus the surface roughness Ra ($\mu$m) and the amount of grinding ($\mu$m) obtained after the grinding with the initial grinding member are specified as follows:

$$Ra_1 / OD_1 \geq 0.10 \qquad (1),$$

where each symbol in the above formula denotes as follows:

$Ra_1$: surface roughness Ra ($\mu$m) after the grinding with the initial grinding member,
$OD_1$: amount of grinding ($\mu$m) after the grinding with the initial grinding member.

This is because that the residual stress in the tube after the grinding step may be more than 138 MPa at $Ra_1 / OD_1$ of less than 0.10. In the light of reducing the residual stress, it is preferable to have a greater value of $Ra_1 / OD_1$. Accordingly, it is preferable to adjust the surface roughness Ra and the amount of grinding after the grinding with the initial grinding member so as to have $Ra_1 / OD_1$ of 0.10 or more. It is more preferable to have $Ra_1 / OD_1$ of 0.20 or more. To the contrary, excessively great $Ra_1 / OD_1$ provides insufficient amount of grinding at the initial stage, which may hinder attainment of the final amount of grinding. Insufficient number of the heads makes it difficult to attain the final surface roughness. Accordingly, it is preferable to define $Ra_1 / OD_1$ to be 0.40 or less.

In the grinding step, it is preferable to employ such a condition that allows the surface roughness and the amount of grinding of the tube to satisfy the following Formula (2):

$$(Ra_i - Ra_{i+1}) / (OD_i - OD_{i+1}) \geq 0.010 \qquad (2),$$

where each symbol in the above formula denotes as follows:

$Ra_1$: surface roughness Ra ($\mu$m) after the grinding with the i-th grinding member from the upstream,
$OD_i$: amount of grinding ($\mu$m) after the grinding with the i-th grinding member from the upstream,
i: positive integer.

If $(Ra_i - Ra_{i+1}) / (OD_i - OD_{i+1})$ is less than 0.010, the residual stress in the tube after the grinding step may be more than 138 MPa. The amount of grinding may become excessive, resulting in excessive grinding. Accordingly, after the grinding with each grinding member, it is preferable to have the surface roughness Ra and the amount of grinding within a range that satisfies the above Formula (2). In the light of reducing the residual stress, it is preferable to have a greater value of $(Ra_i - Ra_{i+1}) / (OD_i - OD_{i+1})$, and it is more preferable to define $(Ra_i - Ra_{i+1}) / (OD_i - OD_{i+1})$ to be 0.015 or more. On the other hand, excessively great $(Ra_i - Ra_{i+1}) / (OD_i - OD_{i+1})$ may make the amount of grinding in the intermediate grinding insufficient. In addition, the surface roughness may not be improved, so that it becomes difficult to attain the final surface roughness. Accordingly, in the case of using a nickel-based alloy, $(Ra_i - Ra_{i+1}) / (OD_i - OD_{i+1})$ is preferably defined to be 0.05 or less, and in the case of using ferrite-based stainless steel, $(Ra_i - Ra_{i+1}) / (OD_i - OD_{i+1})$ is preferably defined to be 0.09 or less. The upper limit of $(Ra_i - Ra_{i+1}) / (OD_i - OD_{i+1})$ may be defined to be an appropriate value depending on the material quality.

Herein, each condition in the rough grinding sub-step, the intermediate grinding sub-step, and the finishing grinding sub-step will be described by using an example of grinding a seamless stainless steel tube having an outer diameter of 19 mm and a length of 25 mm at a grinding speed of 8 m / min, and finishing this tube into a tube having amount of grinding of 0.08 mm or more, and a surface roughness Ra of 0.5 $\mu$m or less.

If distributing the amount of grinding into approximately 0.04 mm, 0.03 mm, and 0.01 mm in the rough grinding sub-step, the intermediate grinding sub-step, and the finishing grinding sub-step, respectively, and if defining the tube surface roughness Ra on the delivery side of the tube to be 2.5, 1.0, and 0.5 in the rough grinding sub-step, the intermediate grinding sub-step, and the finishing grinding sub-step, respectively, for example, the grinding may be carried out by using two to four #80-wheel type grinding members disposed in the rough grinding sub-step, two to six #120-wheel type grinding members disposed in the intermediate grinding sub-step, and two to four PVA wheel type grinding members disposed in the finishing grinding sub-step.

The first heat treatment step may be carried out under a common condition used for attaining dissolution of carbide generated during hot working as well as removal of internal distortion generated in the machining process, or the like. Particularly, the first heat treatment step is preferably configured to hold the tube in a temperature range of not less than a complete dissolution temperature T°C of carbide in the alloy of the tube, and not more than (T+100)°C for one minute or more. If the holding temperature of the first heat treatment step is less than the complete dissolution temperature T°C of carbide in the alloy of the tube, not only undissolved carbide is generated, so that tensile strength, 0.2% yield stress, and hardness, etc., become greater than necessary, but also Cr carbide, which is generated in the grain boundaries in the cooling process after the annealing or in a reheating holding process in the second heat treatment step, is reduced, resulting in deterioration of the grain boundary stress corrosion cracking resistance.

On the other hand, if the holding temperature becomes greater than (T+100)°C, not only the grain size may become significantly coarsened, and the grain boundary stress corrosion cracking resistance deteriorates, but also predetermined characteristics may not be able to be attained in the tensile strength, 0.2% the yield stress, and the hardness, etc. The preferable lower limit of the holding temperature is (T+20)°C, and the preferable upper limit thereof is (T+80)°C. The reason for defining the holding time period to be one minute or more is that this definition is preferable to completely dissolve carbide precipitated during the hot working such as forging. The upper limit of the holding time period is approximately 60 minutes on the real operation basis.

After the first heat treatment step, the tube may be cooled down to a room temperature through forced cooling, and thereafter may be fed to a subsequent step. A straightening step for straightening bends in the tube may be provided between the first heat treatment step and the grinding step.

The second heat treatment step may be carried out under a common condition used for semi-continuously precipitating C dissolved in the first heat treatment step as the Cr carbide ($Cr_{23}C_6$) at the grain boundaries, and restoring a Cr depleted zone in the vicinity of Cr carbide. For example, if the processing temperature is more than 875°C, which deviates from the generation temperature range of Cr carbide in the alloy of the present invention, almost no precipitation of Cr carbide may be generated, while it takes more than 100 hours at less than 600°C, which may deteriorate efficiency of production. Accordingly, the holding temperature is preferably defined to be within a range of 600 to 875°C. It depends on the temperature and the holding time period of the heat treatment, but in principle, a shorter time period is required at a higher temperature, and a longer time period is required at a lower temperature. As for the holding time period, it is preferable to have a holding time period of 0.03 hour or more at a temperature of 800 to 875°C, and it is preferable to increase the holding time period as the holding temperature becomes decreased in a temperature range of less than 800°C, thereby precipitating sufficient amount of Cr carbide at the grain boundaries. In the light of efficiency of production, the preferable upper limit of the holding time period is 100 hours.

After the second heat treatment step, the tube may be cooled down to a room temperature through forced cooling or the like, and then may be fed to a subsequent step.

## EXAMPLE(S)

In Example 1, an experiment assuming a grinding machine having 10 successive wheels was conducted by using wheels of various grit sizes as the grinding members. Specifically, ten wheel type grinding members of various grit sizes were prepared, and nickel-based alloy tubes (60%Ni, 30%Cr, 10%Fe) were grinded with these various grinding members; and the surface roughness Ra, the amount of grinding, and the residual stress after the grinding with each grinding member were measured. The target of this experiment was as follows: the amount of grinding of 100 $\mu$m, the surface roughness Ra of 0.5 $\mu$m or less, and the residual stress of 138 MPa or less. The result thereof is shown in Table 1.

[Table 1]

TABLE 1 (Inventive example 1)

| No. | grit size | Amount of grinding ($\mu$m) | | Surface roughness ($\mu$m) | | $\Delta$Ra / $\Delta$OD | $Ra_1$ / $OD_1$ | Residual stress (MPa) |
|---|---|---|---|---|---|---|---|---|
| | | accumulation OD | difference $\Delta$OD | Ra after each grinding | difference $\Delta$Ra | | | |
| 1 | #80 | 9 | 9 | 2.60 | - | - | 0.289 | 127 |
| 2 | #80 | 28 | 19 | 2.29 | 0.31 | 0.016 | | 110 |
| 3 | #80 | 47 | 19 | 1.91 | 0.38 | 0.020 | | 100 |
| 4 | #120 | 57 | 10 | 1.61 | 0.30 | 0.030 | | 94 |
| 5 | #120 | 67 | 10 | 1.28 | 0.33 | 0.033 | | 91 |
| 6 | #120 | 79 | 12 | 0.97 | 0.31 | 0.026 | | 90 |
| 7 | #120 | 89 | 10 | 0.73 | 0.24 | 0.024 | | 90 |
| 8 | PVA#120 | 95 | 6 | 0.51 | 0.22 | 0.037 | | 87 |
| 9 | PVA#220 | 98 | 3 | 0.42 | 0.09 | 0.030 | | 86 |
| 10 | PVA#220 | 99 | 1 | 0.37 | 0.05 | 0.050 | | 85 |

In Tables, "$\Delta$Ra" denotes "$Ra_i - Ra_{i+1}$", and "$\Delta$OD" denotes "$OD_i - OD_{i+1}$". No. 1 to 3 denote the rough grinding sub-step, No. 4 to 7 denote the intermediate grinding sub-step, and No. 8 to 10 denote the finishing grinding sub-step.

As shown in Table 1, Example 1 exhibited high $Ra_1$ / $OD_1$ of 0.289, and also exhibited ($Ra_i$ - $Ra_{i+1}$) / ($OD_i$ - $OD_{i+1}$) of 0.015 or more after the grinding with any grinding member, and the residual stress satisfied the target value after the grinding with any grinding member. The target amount of grinding and surface roughness were both satisfied.

In Example 2, an experiment assuming a grinding machine having 5 successive wheels was conducted by using wheels of various grit sizes as the grinding members. Specifically, five wheel type grinding members of various grit sizes were prepared, and 13%Cr ferrite-based stainless steel tubes were grinded with these various grinding members; and the surface roughness Ra, the amount of grinding, and the residual stress after the grinding with each grinding member were measured. The target of this experiment was as follows: the amount of grinding of 90 $\mu$m, the surface roughness Ra of 0.5 $\mu$m or less, and the residual stress of 138 MPa or less. The result thereof is shown in Table 2.

[Table 2]

TABLE 2 (Inventive example 2)

| No. | Grit size | Amount of grinding (μm) | | Surface roughness (μm) | | ΔRa / ΔOD | Ra₁ / OD₁ | Residual stress (MPa) |
|---|---|---|---|---|---|---|---|---|
| | | accumulation OD | difference ΔOD | Ra after each grinding | difference ΔRa | | | |
| 1 | #80 | 28 | 28 | 3.32 | - | - | 0.119 | 134 |
| 2 | #120 | 60 | 32 | 1.90 | 1.42 | 0.044 | | 122 |
| 3 | #150 | 78 | 18 | 1.04 | 0.86 | 0.048 | | 110 |
| 4 | PVA#120 | 86 | 8 | 0.56 | 0.48 | 0.060 | | 94 |
| 5 | PVA#220 | 89 | 3 | 0.30 | 0.26 | 0.087 | | 89 |

In Tables, "ΔRa" denotes "$Ra_i - Ra_{i+1}$", and "ΔOD" denotes "$OD_i - OD_{i+1}$". No. 1 and 2 denote the rough grinding sub-step, No. 3 denotes the intermediate grinding sub-step, and No. 4 and 5 denote the finishing grinding sub-step.

As shown in Table 2, Example 2 exhibited $Ra_1 / OD_1$ of 0.119, and also exhibited $(Ra_i - Ra_{i+1}) / (OD_i - OD_{i+1})$ of 0.015 or more after the grinding with any grinding member, and the residual stress after grinding with any grinding member satisfied the target value. The target amount of grinding and surface roughness were both satisfied.

In Example 3, an experiment assuming a grinding machine having 5 successive wheels was conducted by using wheels of various grit sizes as the grinding members. Specifically, five wheel type grinding members of various grit sizes were prepared, and nickel-based alloy tubes (60%Ni, 30%Cr, 10%Fe) were grinded with these various grinding members, and the surface roughness Ra, the amount of grinding, and the residual stress after the grinding with each grinding member were measured. The target of this experiment was as follows: the amount of grinding of 85 μm, the surface roughness Ra of 0.5 μm or less, the residual stress of 138 MPa or less. The result thereof is shown in Table 3.

[Table 3]

TABLE 3(Inventive example 3)

| No. | Grit size | Amount of grinding (μm) | | Surface roughness (μm) | | ΔRa / ΔOD | Ra₁ / OD₁ | Residual stress (MPa) |
|---|---|---|---|---|---|---|---|---|
| | | accumulation OD | difference ΔOD | Ra after each grinding | difference ΔRa | | | |
| 1 | #120 | 22 | 22 | 2.27 | - | - | 0.103 | 121 |
| 2 | #120 | 51 | 29 | 1.60 | 0.71 | 0.024 | | 110 |
| 3 | #150 | 74 | 23 | 0.87 | 0.63 | 0.027 | | 106 |
| 4 | PVA#120 | 81 | 7 | 0.42 | 0.45 | 0.064 | | 98 |
| 5 | PVA#220 | 84 | 3 | 0.31 | 0.11 | 0.037 | | 96 |

In Tables, "ΔRa" denotes "$Ra_i - Ra_{i+1}$", and "ΔOD" denotes "$OD_i - OD_{i+1}$". No. 1 and 2 denote the rough grinding sub-step, No. 3 denotes the intermediate grinding sub-step, and No. 4 and 5 denote the finishing grinding sub-step.

As shown in Table 3, Example 3 exhibited $Ra_1 / OD_1$ of 0.103, and also exhibited $(Ra_i - Ra_{i+1}) / (OD_i - OD_{i+1})$ of 0.015 or more after the grinding with any grinding member, and the residual stress after the grinding with any grinding member satisfied the target value. The target amount of grinding and surface roughness were both satisfied.

In Example 4, a grinding machine having 10 successive wheels which was the same as that of Example 1 was used so as to grind (at a grinding speed of 8 m / min) nickel-based alloy tubes (60%Ni, 30%Cr, 10%Fe), and the wheel life duration and the operation efficiency were investigated at this time. As Comparative Example 1, nickel-based alloy tubes (60%Ni, 30%Cr, 10%Fe) were grinded (at a grinding speed of 4 m / min) with two grinding machines each having 5 successive belt paper (10 successive belt paper in total), and the operation efficiency was investigated at this time. The target of this experiment was as follows: the amount of grinding of 100 μm, the surface roughness Ra of 0.5 μm or less. The result thereof is shown in Table 4.

[Table 4]

TABLE 4 (Inventive example 4)

| | Heads number | Machine number | Grinding speed (m/min) | Operation efficiency (%) | Dummy grinding | Set-up changes |
|---|---|---|---|---|---|---|
| Comparative example 4 | 5 | 2 | 4 | 70 | 5 | every 20 tubes |

(continued)

| | Heads number | Machine number | Grinding speed (m/min) | Operation efficiency (%) | Dummy grinding | Set-up changes |
|---|---|---|---|---|---|---|
| Inventive example 5 | 5 | 1 | 8 | 90 | non | every 300 tubes |

As shown in Table 4, in Comparative Example 1, dummy grinding was required, and set-up change was also required every 20 tubes, so that the operation efficiency was 70%; to the contrary, in Example 4, no dummy grinding was required, and the set-up change was required every 300 tubes, resulting in high operation efficiency of 90%.

The operation efficiency can be found based on "non-operation time period / (operation time period + non-operation time period)" (note that the operation time period: the time period for grinding material on the grinding machine (including the time period for feeding subsequent material), the non-operation time period: total of the time period for replacing a worn grinding member and the time period for grinding a dummy material).

Here, in the belt paper grinding, the grinding performance (amount of grinding per unit length) becomes gradually deteriorated along with grinding. Particularly, in several tubes immediately after the set-up change, abrasive particles likely come off, and variation in the grinding performance becomes great, so that it is difficult to secure the predefined amount of grinding. Consequently, in the belt paper grinding, it is common that several tubes as the dummy material are grinded in advance so as to reduce variation in the grinding performance, and thereafter a product is grinded. To the contrary, in the wheel grinding, it is possible to control load so as to make the amount of grinding constant immediately after the set-up change. Accordingly, in the wheel grinding, it is unnecessary to grind a dummy material in advance other than confirming operation of the grinding quality at the time of set-up change, or at the time of changing a wheel.

It is also possible to control load in the belt paper grinding, but the belt itself has variation, and thus no uniform grinding performance can be attained. In the belt paper grinding, there is only a small wear margin, and exchange of belt paper is required every 20 tubes, and parameters used for the load control should be re-adjusted every set-up change, which is not practical.

In Examples 5 to 9, an experiment assuming a grinding machine having 3 successive wheels was conducted by using wheels of various grit sizes as the grinding members. Specifically, three wheel type grinding members of various grit sizes were prepared, and nickel-based alloy tubes (60%Ni, 30%Cr, 10%Fe) were grinded with these various grinding members, and the surface roughness Ra, the amount of grinding, and the residual stress after the grinding with each grinding member were measured. The target of this experiment was as follows: the amount of grinding of 80 $\mu$m, the surface roughness Ra of 1.0 $\mu$m or less, the residual stress of 138 MPa or less after the grinding. The results of Examples 5 to 9 are shown in Tables 5 to 9, respectively.

[Table 5]

TABLE 5 (Inventive example 5)

| No. | Grit size | Amount of grinding ($\mu$m) | | Surface roughness ($\mu$m) | | $\triangle$Ra / $\triangle$OD | $Ra_1$ / $OD_1$ | Residual stress (MPa) |
|---|---|---|---|---|---|---|---|---|
| | | accumulation OD | difference $\triangle$OD | Ra after each grinding | difference $\triangle$Ra | | | |
| 1 | #60 | 35 | 35 | 3.5 | - | - | 0.100 | 175 |
| 2 | #80 | 65 | 30 | 2.3 | 1.20 | 0.040 | | 146 |
| 3 | #120 | 80 | 15 | 1.0 | 1.30 | 0.087 | | 135 |

[Table 6]

TABLE 6 (Inventive example 6)

| No. | Grit size | Amount of grinding ($\mu$m) | | Surface roughness ($\mu$m) | | $\triangle$Ra / $\triangle$OD | $Ra_1$ / $OD_1$ | Residual stress (MPa) |
|---|---|---|---|---|---|---|---|---|
| | | accumulation OD | difference $\triangle$OD | Ra after each grinding | difference $\triangle$Ra | | | |
| 1 | #60 | 20 | 20 | 4.0 | - | - | 0.200 | 161 |
| 2 | #80 | 55 | 35 | 2.5 | 1.50 | 0.043 | | 147 |
| 3 | #120 | 80 | 25 | 1.0 | 1.50 | 0.060 | | 133 |

[Table 7]

TABLE 7 (Inventive example 7)

| No. | Grit size | Amount of grinding (μm) | | Surface roughness (μm) | | ΔRa / ΔOD | $Ra_1$ / $OD_1$ | Residual stress (MPa) |
|---|---|---|---|---|---|---|---|---|
| | | accumulation OD | difference ΔOD | Ra after each grinding | difference ΔRa | | | |
| 1 | #60 | 10 | 10 | 3.8 | - | - | 0.380 | 139 |
| 2 | #80 | 50 | 40 | 2.2 | 1.60 | 0.040 | | 133 |
| 3 | #120 | 80 | 30 | 1.0 | 1.20 | 0.040 | | 129 |

[Table 8]

TABLE 8 (Inventive example 8)

| No. | Grit size | Amount of grinding (μm) | | Surface roughness (μm) | | ΔRa / ΔOD | $Ra_1$ / $OD_1$ | Residual stress (MPa) |
|---|---|---|---|---|---|---|---|---|
| | | accumulation OD | difference ΔOD | Ra after each grinding | difference ΔRa | | | |
| 1 | #60 | 11 | 11 | 4.4 | - | - | 0.400 | 142 |
| 2 | #80 | 50 | 39 | 2:2 | 2.20 | 0.056 | | 134 |
| 3 | #120 | 80 | 30 | 1.0 | 1.20 | 0.040 | | 129 |

[Table 9]

TABLE 9 (Inventive example 9)

| No. | Grit size | Amount of grinding (μm) | | Surface roughness (μm) | | ΔRa / ΔOD | $Ra_1$ / $OD_1$ | Residual stress (MPa) |
|---|---|---|---|---|---|---|---|---|
| | | accumulation OD | difference ΔOD | Ra after each grinding | difference ΔRa | | | |
| 1 | #60 | 9 | 9 | 3.8 | - | - | 0.422 | 140 |
| 2 | #80 | 50 | 41 | 2.4 | 1.40 | 0.034 | | 135 |
| 3 | #120 | 80 | 30 | 1.1 | 1.30 | 0.043 | | 130 |

As shown in Tables 5 to 9, Examples 5 to 9 exhibited $Ra_1$ / $OD_1$ within the range specified by the present invention, so that the residual stress and the amount of grinding could be both within the range of the target value. As to the surface roughness, excluding the Inventive Example 9 of the present invention having high $Ra_1$ / $OD_1$ of 0.42, every Example could attain $Ra_1$ / $OD_1$ of the target value or less.

In Comparative Examples 1 to 3, an experiment assuming a grinding machine having 2, 3, or 5 successive wheels was conducted using wheels of various grit sizes as the grinding members. Nickel-based alloy tubes (60%Ni, 30%Cr, 10%Fe) were grinded with these various grinding members, and the surface roughness Ra, the amount of grinding, and the residual stress after the grinding with each grinding member were measured. The target of this experiment was as follows: the amount of grinding of 80 μm, the surface roughness Ra of 1.0 μm or less, and the residual stress of 138 MPa or less after the grinding. The results of Comparative Examples 1 to 3 are shown in Tables 10 to 12, respectively.

[Table 10]

TABLE 10 (Comparative example 1)

| No. | Grit size | Amount of grinding (μm) | | Surface roughness (μm) | | ΔRa / ΔOD | $Ra_1$ / $OD_1$ | Residual stress (MPa) |
|---|---|---|---|---|---|---|---|---|
| | | accumulation OD | difference ΔOD | Ra after each grinding | difference ΔRa | | | |
| 1 | #60 | 40 | 40 | 3.8 | - | - | 0.095 | 190 |
| 2 | #60 | 80 | 40 | 2.0 | 1.80 | 0.045 | | 175 |

[Table 11]

TABLE 11 (Comparative example 2)

| No. | Grit size | Amount of grinding ($\mu$m) | | Surface roughness ($\mu$m) | | $\Delta$Ra / $\Delta$OD | Ra$_1$ / OD$_1$ | Residual stress (MPa) |
|---|---|---|---|---|---|---|---|---|
| | | accumulation OD | difference $\Delta$OD | Ra after each grinding | difference $\Delta$Ra | | | |
| 1 | #60 | 40 | 40 | 3.8 | - | - | 0.095 | 190 |
| 2 | #80 | 70 | 30 | 2.8 | 1.00 | 0.033 | | 175 |
| 3 | #120 | 80 | 10 | 1.6 | 1.20 | 0.120 | | 152 |

[Table 12]

TABLE 12 (Comparative example 3)

| No. | Grit size | Amount of grinding ($\mu$m) | | Surface roughness ($\mu$m) | | $\Delta$Ra / $\Delta$OD | Ra$_1$ / OD$_1$ | Residual stress (MPa) |
|---|---|---|---|---|---|---|---|---|
| | | accumulation OD | difference $\Delta$OD | Ra after each grinding | difference $\Delta$Ra | | | |
| 1 | #60 | 40 | 40 | 3.8 | - | - | 0.095 | 190 |
| 2 | #80 | 55 | 15 | 3.0 | 0.80 | 0.053 | | 180 |
| 3 | #80 | 70 | 15 | 2.7 | 0.30 | 0.020 | | 172 |
| 4 | #120 | 75 | 5 | 1.7 | 1.00 | 0.200 | | 168 |
| 5 | #120 | 80 | 5 | 1.2 | 0.50 | 0.100 | | 161 |

As shown in Tables 10 to 12, in Comparative Examples 1 to 3 whose Ra$_1$ / OD$_1$ deviated from the range specified by the present invention, neither the residual stress nor the surface roughness could be the target value or less regardless of the number of the heads of the grinding machine.

Next, in Inventive Examples 10 to 19, an experiment assuming a grinding machine having 5 successive wheels was conducted by using wheels of various grit sizes as the grinding members. In this experiment, (Ra$_i$ - Ra$_{i+1}$) / (OD$_i$ - OD$_{i+1}$) was mainly changed. Five wheel type grinding members of various grit sizes were prepared, and nickel-based alloy tubes (60%Ni, 30%Cr, 10%Fe) were grinded with these various grinding members, and the surface roughness Ra, the amount of grinding, and the residual stress after the grinding with each grinding member were measured. The target of this experiment was as follows: the amount of grinding of 70 to 90 $\mu$m, the surface roughness Ra of 1.0 $\mu$m or less, the residual stress of 138 MPa or less after the grinding. The results of Examples 5 to 9 are shown in Tables 5 to 9, respectively.

[Table 13]

TABLE 13 (Inventive example 10)

| No. | grit size | Amount of grinding ($\mu$m) | | Surface roughness ($\mu$m) | | $\Delta$Ra / $\Delta$OD | Ra$_1$ / OD$_1$ | Residual stress (MPa) |
|---|---|---|---|---|---|---|---|---|
| | | accumulation OD | difference $\Delta$OD | Ra after each grinding | difference $\Delta$Ra | | | |
| 1 | #80 | 25 | 25 | 3.0 | - | - | 0.120 | 135 |
| 2 | #120 | 55 | 30 | 1.9 | 1.10 | 0.037 | | 128 |
| 3 | #120 | 75 | 20 | 1.2 | 0.70 | 0.035 | | 125 |
| 4 | #120 | 85 | 10 | 0.7 | 0.50 | 0.050 | | 120 |
| 5 | PVA | 90 | 5 | 0.5 | 0.20 | 0.040 | | 117 |

[Table 14]

TABLE 14(Inventive example 11)

| No. | Grit size | Amount of grinding (μm) | | Surface roughness (μm) | | ΔRa / ΔOD | Ra₁ / OD₁ | Residual stress (MPa) |
|---|---|---|---|---|---|---|---|---|
| | | accumulation OD | difference ΔOD | Ra after each grinding | difference ΔRa | | | |
| 1 | #80 | 14 | 14 | 2.8 | - | - | 0.200 | 130 |
| 2 | #120 | 44 | 30 | 1.8 | 1.00 | 0.033 | | 128 |
| 3 | #120 | 64 | 20 | 1.1 | 0.70 | 0.035 | | 125 |
| 4 | #120 | 74 | 10 | 0.6 | 0.50 | 0.050 | | 120 |
| 5 | PVA | 80 | 6 | 0.5 | 0.10 | 0.017 | | 117 |

[Table 15]

TABLE 15 (Inventive example 12)

| No. | Grit size | Amount of grinding (μm) | | Surface roughness (μm) | | ΔRa / ADD | Ra₁ / OD₁ | Residual stress (MPa) |
|---|---|---|---|---|---|---|---|---|
| | | accumulation OD | difference ΔOD | Ra after each grinding | difference ΔRa | | | |
| 1 | #80 | 14 | 14 | 2.8 | - | - | 0.200 | 130 |
| 2 | #120 | 44 | 30 | 1.8 | 1.00 | 0.033 | | 128 |
| 3 | #120 | 64 | 20 | 1.1 | 0.70 | 0.035 | | 125 |
| 4 | #120 | 74 | 10 | 0.6 | 0.50 | 0.050 | | 120 |
| 5 | PVA | 80 | 6 | 0.5 | 0.10 | 0.017 | | 117 |

[Table 16]

TABLE 16 (Inventive example 13)

| No. | Grit size | Amount of grinding (μm) | | Surface roughness (μm) | | ΔRa / ΔOD | Ra₁ / OD₁ | Residual stress (MPa) |
|---|---|---|---|---|---|---|---|---|
| | | accumulation OD | difference ΔOD | Ra after each grinding | difference ΔRa | | | |
| 1 | #80 | 14 | 14 | 2.8 | - | - | 0.200 | 130 |
| 2 | #80 | 44 | 30 | 2.4 | 0.40 | 0.013 | | 130 |
| 3 | #80 | 69 | 25 | 2.1 | 0.30 | 0.012 | | 127 |
| 4 | #120 | 79 | 10 | 1.6 | 0.50 | 0.050 | | 120 |
| 5 | PVA | 85 | 6 | 1.0 | 0.60 | 0.100 | | 117 |

[Table 17]

TABLE 17 (Inventive example 14)

| No. | Grit size | Amount of grinding (μm) | | Surface roughness (μm) | | ΔRa / ΔOD | Ra₁ / OD₁ | Residual stress (MPa) |
|---|---|---|---|---|---|---|---|---|
| | | accumulation OD | difference ΔOD | Ra after each grinding | difference ΔRa | | | |
| 1 | #60 | 10 | 10 | 3.8 | - | - | 0.380 | 139 |
| 2 | #120 | 35 | 25 | 2.8 | 1.00 | 0.040 | | 132 |
| 3 | #120 | 55 | 20 | 1.9 | 0.90 | 0.045 | | 125 |
| 4 | #120 | 70 | 15 | 1.2 | 0.70 | 0.047 | | 120 |
| 5 | #120 | 85 | 15 | 0.5 | 0.70 | 0.047 | | 115 |

[Table 18]

TABLE 18 (Inventive example 15)

| No. | grit size | Amount of grinding ($\mu$m) | | Surface roughness ($\mu$m) | | $\Delta$Ra / $\Delta$OD | $Ra_1$ / $OD_1$ | Residual stress (MPa) |
|---|---|---|---|---|---|---|---|---|
| | | accumulation OD | difference $\Delta$OD | Ra after each grinding | difference $\Delta$Ra | | | |
| 1 | #60 | 10 | 10 | 3.8 | - | - | 0.380 | 139 |
| 2 | #120 | 30 | 20 | 2.5 | 1.30 | 0.065 | | 139 |
| 3 | #120 | 50 | 20 | 1.4 | 1.10 | 0.055 | | 138 |
| 4 | #120 | 65 | 15 | 1.2 | 0.20 | 0.013 | | 137 |
| 5 | #120 | 80 | 15 | 1.0 | 0.20 | 0.013 | | 136 |

[Table 19]

TABLE 19 (Inventive example 16)

| No. | Grit size | Amount of grinding ($\mu$m) | | Surface roughness ($\mu$m) | | $\Delta$Ra / $\Delta$OD | $Ra_1$ / $OD_1$ | Residual stress (MPa) |
|---|---|---|---|---|---|---|---|---|
| | | accumulation OD | difference $\Delta$OD | Ra after each grinding | difference $\Delta$Ra | | | |
| 1 | #60 | 10 | 10 | 3.8 | - | - | 0.380 | 139 |
| 2 | #80 | 30 | 20 | 3.7 | 0.10 | 0.005 | | 137 |
| 3 | #80 | 50 | 20 | 3.6 | 0.10 | 0.005 | | 137 |
| 4 | #80 | 65 | 15 | 3.5 | 0.10 | 0.007 | | 135 |
| 5 | #80 | 80 | 15 | 3.4 | 0.10 | 0.007 | | 134 |

[Table 20]

TABLE 20 (Inventive example 17)

| No. | Grit size | Amount of grinding ($\mu$m) | | Surface roughness ($\mu$m) | | $\Delta$Ra / $\Delta$OD | $Ra_1$ / $OD_1$ | Residual stress (MPa) |
|---|---|---|---|---|---|---|---|---|
| | | accumulation OD | difference $\Delta$OD | Ra after each grinding | difference $\Delta$Ra | | | |
| 1 | #60 | 10 | 10 | 3.8 | - | - | 0.380 | 139 |
| 2 | #80 | 30 | 20 | 3.7 | 0.10 | 0.005 | | 137 |
| 3 | #80 | 50 | 20 | 3.6 | 0.10 | 0.005 | | 130 |
| 4 | #120 | 65 | 15 | 2.9 | 0.70 | 0.047 | | 127 |
| 5 | #120 | 80 | 15 | 2.5 | 0.40 | 0.027 | | 123 |

[Table 21]

TABLE 21 (Inventive example 18)

| No. | Grit size | Amount of grinding ($\mu$m) | | Surface roughness ($\mu$m) | | $\Delta$Ra / AOD | $Ra_1$ / $OD_1$ | Residual stress (MPa) |
|---|---|---|---|---|---|---|---|---|
| | | accumulation OD | difference $\Delta$OD | Ra after each grinding | difference $\Delta$Ra | | | |
| 1 | #60 | 10 | 10 | 3.8 | - | - | 0.380 | 139 |
| 2 | #120 | 30 | 20 | 2.7 | 1.10 | 0.055 | | 134 |
| 3 | #120 | 50 | 20 | 1.6 | 1.10 | 0.055 | | 130 |
| 4 | #120 | 60 | 10 | 1.3 | 0.30 | 0.030 | | 127 |
| 5 | #120 | 70 | 10 | 1.0 | 0.30 | 0.030 | | 125 |

[Table 22]

TABLE 22 (Inventive example 19)

| No. | Grit size | Amount of grinding (μm) | | Surface roughness (μm) | | ΔRa / ΔOD | Ra₁ / OD₁ | Residual stress (MPa) |
|---|---|---|---|---|---|---|---|---|
| | | accumulation OD | difference ΔOD | Ra after each grinding | difference ΔRa | | | |
| 1 | #60 | 10 | 10 | 3.8 | - | - | 0.380 | 139 |
| 2 | #120 | 35 | 25 | 2.6 | 1.20 | 0.048 | | 135 |
| 3 | #120 | 55 | 20 | 1.8 | 0.80 | 0.040 | | 130 |
| 4 | #120 | 70 | 15 | 1.4 | 0.40 | 0.027 | | 126 |
| 5 | #121 | 80 | 10 | 1.0 | 0.40 | 0.040 | | 124 |

As shown in Tables 13 to 22, each of Examples 10 to 19 exhibited $Ra_1 / OD_1$ within the range specified by the present invention, so that the residual stress and the amount of grinding could be both within the range of the target value. Meanwhile, in Examples 16 and 17 (see Tables 19 and 20), $(Ra_i - Ra_{i+1}) / (OD_i - OD_{i+1})$ was too small, so that the surface roughness became deteriorated.

Next, in Examples 20 to 23, an experiment assuming a grinding machine having 5 successive wheels was conducted by using wheels of various grit sizes as the grinding members. In this experiment, ferrite-based stainless steel tubes (SUS410L) were grinded, and the surface roughness Ra, the amount of grinding, and the residual stress after the grinding with each grinding member were measured. The target of this experiment was as follows: the amount of grinding of 70 to 85 μm, the surface roughness Ra of 1.0 μm or less, the residual stress of 138 MPa or less after the grinding. The results thereof are shown in Tables 23 to 26.

[Table 23]

TABLE 23 (Inventive example 20)

| No. | Grit size | Amount of grinding (μm) | | Surface roughness (μm) | | ΔRa / ΔOD | Ra₁ / OD₁ | Residual stress (MPa) |
|---|---|---|---|---|---|---|---|---|
| | | accumulation OD | difference ΔOD | Ra after each grinding | difference ΔRa | | | |
| 1 | #80 | 28 | 28 | 3.32 | - | - | 0.119 | 134 |
| 2 | #120 | 60 | 32 | 1.9 | 1.42 | 0.044 | | 122 |
| 3 | #150 | 78 | 18 | 1.0 | 0.90 | 0.050 | | 110 |
| 4 | PVA | 86 | 8 | 0.56 | 0.44 | 0.055 | | 94 |
| 5 | PVA | 89 | 3 | 0.3 | 0.26 | 0.087 | | 89 |

[Table 24]

TABLE 24 (Inventive example 21)

| No. | Grit size | Amount of grinding (μm) | | Surface roughness (μm) | | ΔRa / ΔOD | Ra₁ / OD₁ | Residual stress (MPa) |
|---|---|---|---|---|---|---|---|---|
| | | accumulation OD | difference ΔOD | Ra after each grinding | difference ΔRa | | | |
| 1 | #80 | 30 | 30 | 3.4 | - | - | 0.113 | 134 |
| 2 | #150 | 40 | 10 | 2.5 | 0.90 | 0.090 | | 122 |
| 3 | #150 | 50 | 10 | 1.6 | 0.90 | 0.090 | | 113 |
| 4 | PVA | 55 | 5 | 1.1 | 0.50 | 0.100 | | 108 |
| 5 | PVA | 60 | 5 | 0.6 | 0.50 | 0.100 | | 105 |

[Table 25]

TABLE 25 (Inventive example 22)

| No. | Grit size | Amount of grinding (μm) | | Surface roughness (μm) | | ΔRa / ΔOD | Ra₁ / OD₁ | Residual stress (MPa) |
|---|---|---|---|---|---|---|---|---|
| | | accumulation OD | difference ΔOD | Ra after each grinding | difference ΔRa | | | |
| 1 | #80 | 30 | 30 | 3.4 | - | - | 0.113 | 134 |
| 2 | #80 | 40 | 10 | 2.6 | 0.80 | 0.080 | | 127 |
| 3 | #120 | 55 | 15 | 1.4 | 1.20 | 0.080 | | 119 |
| 4 | #120 | 75 | 20 | 0.7 | 0.70 | 0.035 | | 115 |
| 5 | PVA | 80 | 5 | 0.5 | 0.20 | 0.040 | | 109 |

[Table 26]

TABLE 26 (Inventive example 23)

| No. | Grit size | Amount of grinding (μm) | | Surface roughness (μm) | | ΔRa / ΔOD | Ra₁ / OD₁ | Residual stress (MPa) |
|---|---|---|---|---|---|---|---|---|
| | | accumulation OD | difference ΔOD | Ra after each grinding | difference ΔRa | | | |
| 1 | #80 | 30 | 30 | 3.4 | - | - | 0.113 | 134 |
| 2 | #120 | 45 | 15 | 2.3 | 1.10 | 0.073 | | 122 |
| 3 | #150 | 60 | 15 | 1.2 | 1.10 | 0.073 | | 117 |
| 4 | #150 | 75 | 15 | 0.7 | 0.50 | 0.033 | | 111 |
| 5 | PVA | 80 | 5 | 0.5 | 0.20 | 0.040 | | 107 |

As shown in Tables 23 to 26, each of Examples 20 to 23 exhibited $Ra_1 / OD_1$ within the range specified by the present invention, so that the residual stress and the amount of grinding could be both within the range of the target value in the grinding of the ferrite-based stainless steel tubes as well.

[INDUSTRIAL APPLICABILITY]

According to the present invention, it is possible to enhance efficiency of production of a heat-exchanger tube for a steam generator for use in a nuclear power plant.

[REFERENCE SIGNS LIST]

    1. Tube

    2. Grinding member

## Claims

1. A producing method of a heat-exchanger tube for a steam generator for use in a nuclear power plant having steps:

    annealing a tube (1);
    grinding an outer surface of the tube with a wheel type grinding member (2), the grinding comprising a rough grinding sub-step, an intermediate grinding sub-step, and a finishing grinding sub-step; and
    applying heat treatment to the tube under an environment of an oxidation inhibition atmosphere,
    wherein the wheel type grinding member is allowed to abut against the outer surface of the tube while the tube is moved in a longitudinal direction (B) thereof with a rotation of a circumferential direction (A) thereof so as to grind the tube,
    wherein the grinding step satisfies the following Formula (1):

$$Ra_1 / OD_1 \geq 0.10\,(1),$$

where each symbol in the above formula denotes as follows:

$Ra_1$: surface roughness Ra ($\mu$m) after grinding with an initial grinding member,
$OD_1$: amount of grinding ($\mu$m) after grinding with the initial grinding member.

2. The producing method of a heat-exchanger tube for a steam generator for use in a nuclear power plant according to claim 1, wherein the residual stress of the tube after the grinding step is 138 MPa or less.

3. The producing method of a heat-exchanger tube for a steam generator for use in a nuclear power plant according to any one of claims 1 or 2, wherein the surface roughness Ra of the tube after grinding is 1.0 $\mu$m or less, and amount of grinding after the grinding step is 80 $\mu$m or more.

4. The producing method of a heat-exchanger tube for a steam generator for use in a nuclear power plant according to any one of claims 1 to 3, wherein the grinding step carries out grinding by using 5 or more to 10 or less successive grinding members.

**Patentansprüche**

1. Verfahren zur Herstellung eines Wärmetauscherrohrs für einen Dampferzeuger zur Verwendung in einem Kernkraftwerk mit den folgenden Schritten:

Anlassen eines Rohres (1);
Schleifen einer äußeren Oberfläche des Rohres mit einem schleifradartigen Schleifelement (2), wobei das Schleifen einen Grobschleifunterschritt, einen Zwischenschleifunterschritt und einen Feinschleifunterschritt umfasst; und
Anwenden einer Wärmebehandlung auf das Rohr in einer Umgebung mit einer oxidationshemmenden Atmosphäre,
wobei das schleifradartige Schleifelement an der äußeren Oberfläche des Rohrs anliegen darf, während das Rohr in einer Längsrichtung (B) desselben mit einer Rotation einer Umfangsrichtung (A) desselben bewegt wird, um das Rohr zu schleifen,
wobei der Schleifschritt die folgende Formel (1) erfüllt:

$$Ra_1 / OD_1 \geq 0{,}10\,(1),$$

wobei jedes Symbol in der obigen Formel Folgendes bezeichnet:

$Ra_1$: Oberflächenrauheit Ra ($\mu$m) nach dem Schleifen mit einem Anfangs-Schleifelement,
$OD_1$: Schleifmenge ($\mu$m) nach dem Schleifen mit dem Anfangs-Schleifelement.

2. Verfahren zur Herstellung eines Wärmetauscherrohrs für einen Dampferzeuger zur Verwendung in einem Kernkraftwerk nach Anspruch 1, wobei die Eigenspannung des Rohrs nach dem Schleifschritt 138 MPa oder weniger beträgt.

3. Verfahren zur Herstellung eines Wärmetauscherrohrs für einen Dampferzeuger zur Verwendung in einem Kernkraftwerk nach einem der Ansprüche 1 oder 2, wobei die Oberflächenrauheit Ra des Rohrs nach dem Schleifen 1,0 $\mu$m oder weniger beträgt und die Schleifmenge nach dem Schleifschritt 80 $\mu$m oder mehr beträgt.

4. Verfahren zur Herstellung eines Wärmetauscherrohrs für einen Dampferzeuger zur Verwendung in einem Kernkraftwerk nach einem der Ansprüche 1 bis 3, wobei der Schleifschritt Schleifen unter Verwendung von 5 oder mehr bis 10 oder weniger aufeinanderfolgenden Schleifelementen ausführt.

**Revendications**

1. Procédé de fabrication d'un tube de transfert de chaleur destiné à un générateur de vapeur destiné à être utilisé dans une centrale nucléaire, qui présente les étapes qui consistent à :

    recuire un tube (1) ;
    poncer une surface extérieure du tube avec un élément de ponçage à roulette (2), le meulage comprenant une sous-étape de ponçage grossier,
    une sous-étape de ponçage intermédiaire, et une sous-étape de ponçage de finition ; et
    appliquer un traitement thermique au tube dans une atmosphère d'inhibition de l'oxydation,
    dans lequel l'élément de ponçage à roulette peut buter contre la surface extérieure du tube pendant que le tube est déplacé dans une direction longitudinale (B) de celui-ci par rotation d'une direction circonférentielle (A) de celui-ci, de façon à poncer le tube,
    dans lequel l'étape de ponçage satisfait la formule (1) suivante :

$$Ra_1 / OD_1 \geq 0.10 \, (1),$$

    chaque symbole de la formule ci-dessus correspondant à ce qui suit :

    $Ra_1$ : rugosité de surface Ra ($\mu$m) après le ponçage avec un élément de ponçage initial,
    $OD_1$ : quantité de ponçage ($\mu$m) après ponçage avec l'élément de ponçage initial.

2. Procédé de fabrication d'un tube de transfert de chaleur destiné à un générateur de vapeur destiné à être utilisé dans une centrale nucléaire selon la revendication 1, dans lequel la contrainte résiduelle du tube après l'étape de ponçage est de 138 MPa ou moins.

3. Procédé de fabrication d'un tube de transfert de chaleur destiné à un générateur de vapeur destiné à être utilisé dans une centrale nucléaire selon l'une quelconque des revendication 1 ou 2, dans lequel la rugosité de surface Ra du tube après le ponçage est de 1 $\mu$m ou moins, et la quantité de ponçage après l'étape de ponçage est de 80 $\mu$m ou plus.

4. Procédé de fabrication d'un tube de transfert de chaleur destiné à un générateur de vapeur destiné à être utilisé dans une centrale nucléaire selon l'une quelconque des revendications 1 à 3, dans lequel l'étape de ponçage effectue le ponçage à l'aide de 5 (ou plus) à 10 (ou moins) éléments de ponçage successifs.

FIGURE 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 05112842A B
- JP 5195191 A
- JP 7252564 A
- JP 2002121630 A
- JP 2007224371 A
- JP 2007224372 A
- JP 5112842 A